Europäisches Patentamt

(19) European Patent Office  (11) Publication number: **0 238 733**
**B1**
Office européen des brevets

(12) # EUROPEAN PATENT SPECIFICATION

(45) Date of publication of the patent specification:
**16.08.89**

(51) Int. Cl.⁴: **A61C 13/225**

(21) Application number: **86301036.9**

(22) Date of filing: **14.02.86**

(54) Denture connector.

(43) Date of publication of application:
**30.09.87 Bulletin 87/40**

(73) Proprietor: **Poveromo, Melvin D., Suite 203 1160 Kane Concourse, Bay Harbor Islands Miami Florida 33154(US)**

(45) Publication of the grant of the patent:
**16.08.89 Bulletin 89/33**

(72) Inventor: **Poveromo, Melvin D., Suite 203 1160 Kane Concourse, Bay Harbor Islands Miami Florida 33154(US)**

(84) Designated Contracting States:
**CH DE GB LI**

(74) Representative: **Sawers, Lawrence Peter et al, PAGE, WHITE & FARRER 54 Doughty Street, London WC1N 2LS(GB)**

(56) References cited:
**CH-A- 650 917**
**FR-A- 1 493 622**
**US-A- 4 196 516**
**US-A- 4 540 367**

ACTORUM AG

## Description

This invention pertains to a connector for dentures which includes a female member, a male member and a sleeve insert.

The prior art shows denture connector or attachment devices comprising male and female metal members. In particular, FR-A 1 493 622 (Narboni) discloses a denture connector comprising the features of the preamble of claim 1. DE-U 8 517 420.3 describes a similar denture connector in which the ends of the sleeve are conical and cooperate with similar conical surfaces on the boss and on the head of the screw so that tightening of the screw expands the sleeve against the inside of the female member.

It is an object of this invention to provide a denture connector or attachment which is simple and inexpensive to construct and install and which can be adjusted, firstly on installation and subsequently to take up wear.

According to the invention, there is provided a denture connector comprising interengaging male and female members, the female member being adapted to be attached to a denture crown and the male member being adapted to be attached to adjacent denture material, the male member comprising a boss received in the female member for rotation therein and an expandable sleeve fitting over the boss and inside the female member, the boss being provided with a screw capable of exerting pressure on the sleeve to expand it against the inside of the female member, characterised in that a tolerance space of between 0.1 mm and 0.4 mm is provided between the outer diameter of the sleeve and the inside of the female member to permit adjustment of the male member within the female member in the unexpanded state of the sleeve, and in that an attachment member extends from the male member for attaching the said male member to adjacent denture material.

The tolerance which exists in the unexpanded state of the sleeve assists initial installation and the specified tolerance of 0.1 mm to 0.4 mm has been found to be critical for this purpose. By expanding the sleeve, the male unit is secured in the female member, and wear can subsequently be taken up without replacing the sleeve.

The sleeve may be of plastic, e.g. nylon, and may be replaceable when totally worn. The plastic sleeve functions as a friction and bearing surface when the male member and sleeve are positioned within the female member.

The male member may comprise a flat top part with a depending boss portion having a threaded bore receiving the screw.

The attachment member facilitates rotation of the male member when positioned inside the female member and attachment of the male member to adjacent denture material.

The denture connector may further comprise a retainer block extending from a lateral projection on the male member for attaching the male member to adjacent denture material.

Specific embodiments of the invention will now be described in more detail by way of example and with reference to the accompanying drawings, in which:

Figure 1 is a perspective view of the invention showing a female member having a retention plate which is embedded in a crown and a male member rotatable in the female member and having a connector for attachment to adjacent denture material,

Figure 2 is a side view of the female member which is a hollow cylinder attached to the crown by a retention plate,

Figure 3 is a side view, partly in section, of a modified denture connector showing an attachment member, a sleeve and a female member with a tolerance space between the sleeve member and female member,

Figure 4 is a perspective view of the male member, sleeve and attaching screw and a retainer block with securing pin,

Figure 5 is a perspective view of the retainer block with projections to assist in maintaining the retainer block in adjacent denture material,

Figure 6 is a side view, partly in section, of a modified form of the denture connector showing the connector member assembled to its support arm,

Figure 7 is a perspective view of the sleeve, which may be continuous or split, and

Figure 8 is an exploded view of the connector of Figure 3.

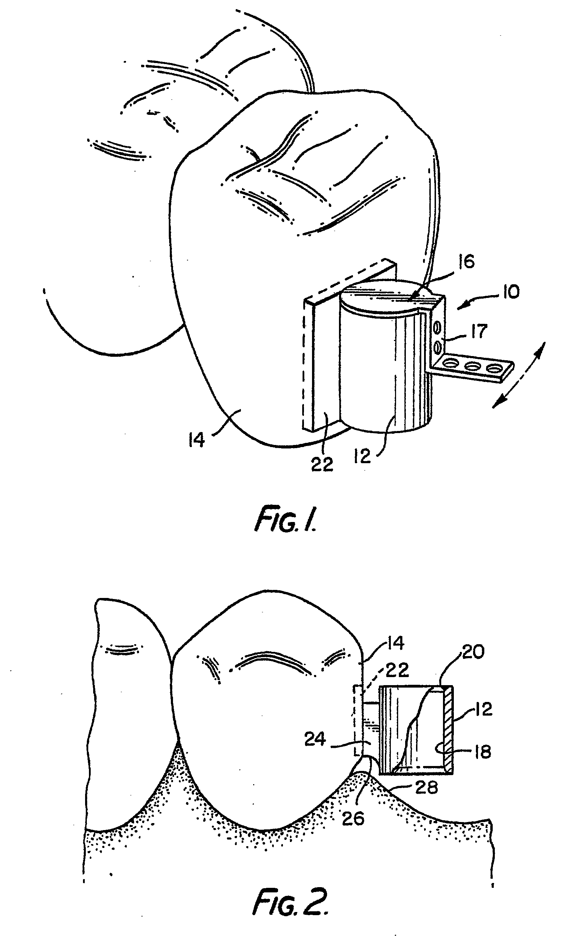

Referring now in more detail to the drawings, Figure 1 shows a denture connector 10 comprising a female member 12 attached to the crown of a denture 14 and a male member 16 having an attachment shank 17 for attaching the male member to an adjacent denture area.

The female member, Figure 2, comprises a cylindrical portion 18 having an outwardly flared upper edge 20. The cylindrical portion 18 is attached to the denture crown 14 by a retainer plate 22 and an intermediate web portion 24. The bottom edge of the web portion 24 is curved at 26 to accomodate the crest 28 of the gingiva which is generally elevated next to the crown.

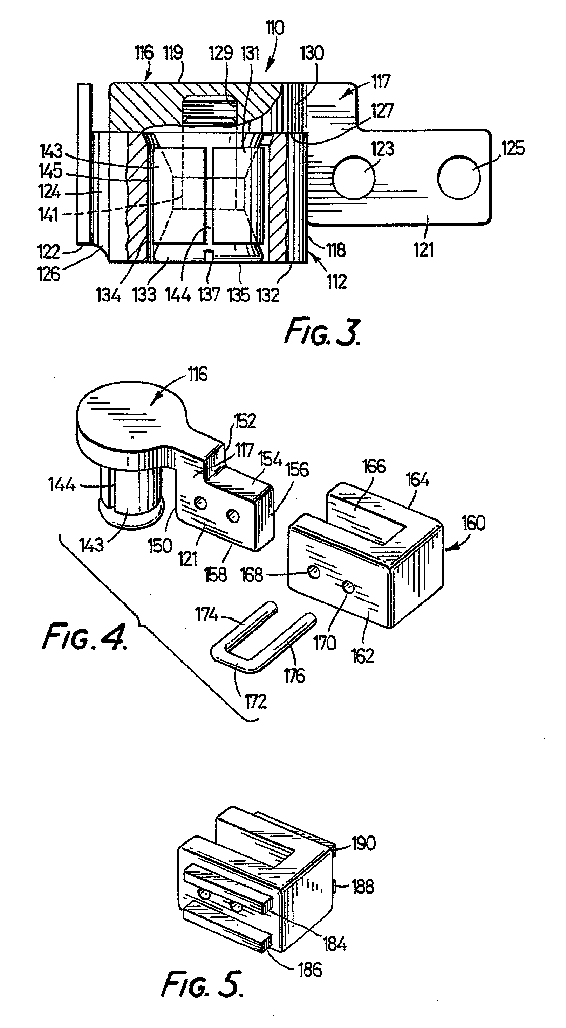

Figure 3 shows a denture connector 110 comprising a female member 112 which is designed to be attached to the crown of a denture 14, Figures 1 and 2, and a male unit 116 having a shank portion 117 with a lateral projection 121 which is used in conjunction with a retainer block 160, Figures 4 to 6.

The female member 112 has a hollow cylindrical portion 118 having a retainer plate 122 which is embedded in a denture crown 14 of Figures 1 and 2 and a web portion 124 which has a curved edge 126 to accomodate the crest of the gingiva, denoted 28 in Figure 2.

The male unit 116 comprises a top member having a planar surface 119, and a depending shank 117 from which there extends a lateral projection 121. There are a plurality of apertures 123 and 125 in projection 121. Below top planar surface 119 is another surface 127 with a threaded recess 129. Extending from the surface 127 is a conical boss 131 which has a bore therethrough in alignment with the recess 129. The conical boss 131 is adapted to be inserted into the cylindrical female portion 118. A screw 133 has a flat end 135 with a slot 137 therein for receiving the blade of a tool. The screw 133 has an inwardly tapering wall 134 which is complementary and symmetrical with conical boss 131. The screw 133 has a threaded shank portion 141 for turning into the threaded recess 129. An expandable sleeve 143 having a vertical slot 144 is positioned about the shank 141 of the screw and serves to fasten the male unit in the cylindrical female member. It will be seen that the assemblage of female and male units, before expanding the sleeve, will result in a tolerance space 145 between the inner diameter of the female member and the outer diameter of the sleeve. This tolerance space must be between 0.1 mm and 0.4 mm. the tolerance space is important to permit ease of movement of the male unit in the female portion whereby optimum adjustment of the denture connector may be achieved.

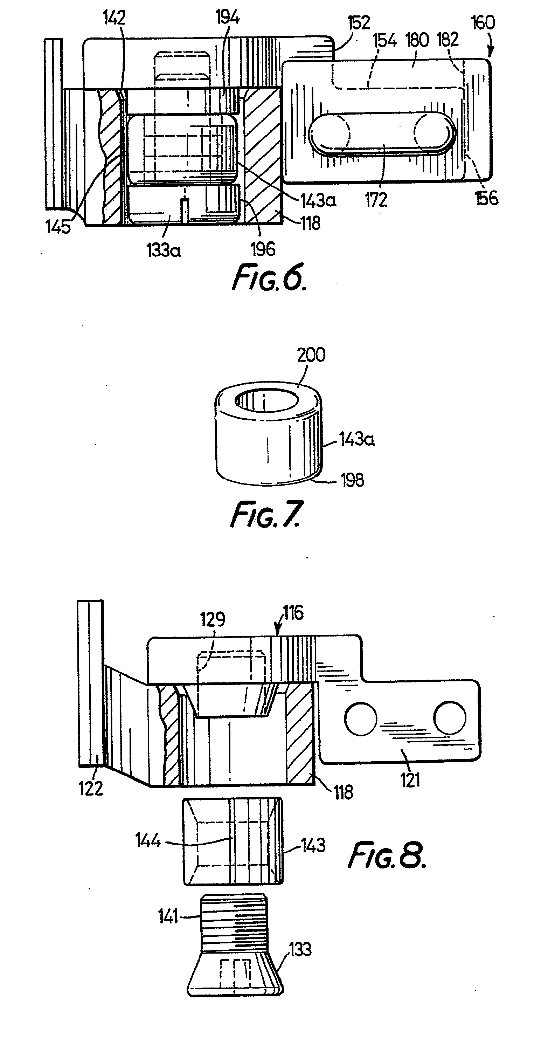

In Figure 4 there is shown the male unit 116 having the shank 117 having a vertical inner wall 150, which extends vertically adjacent the female member's cylindrical portion 118 and beyond the midpoint thereof when the male unit 116 is completely inserted in the female member 112 as best seen in Figures 3 and 6, and an outer smaller dimensioned wall 152 which adjoins a top wall 154 of the lateral projection 121. The lateral projection has a end wall 156 and a bottom wall 158. A removable retainer block 160 is shown to have parallel walls 162 and 164 defining a slot 166. The slot 166 receives the lateral projection 121. Retainer block 160 has a plurality of apertures 168 and 170 which align with apertures 123 and 125 in the lateral projection 121. A U-shaped pin 172 having parallel legs 174 and 176 extends through the apertures 168, 170 and 123, 125 to retain the retainer block 160 on the lateral projection 121. Upon assemblage of 121 and 160, there will be a hollow space 180 defined by wall 152, 154, side walls 162 and 164 and inside wall 182 as best seen in Figure 6.

Retainer block member 160, Figure 5, is provided with spaced parallel projection fins 184 and 186 on one wall 162 and projection fins 188 and 190 on the other wall 164. The fins may be integral with the retainer block member 160 or they may form separate pieces secured to the block 160 by suitable bonding means.

Figure 6 shows a slightly modified form of the structure of Figure 3 wherein the upper edge of the cylindrical female member 118 is bevelled at 142, the projecting boss 194 is cylindrical and the screw 133a has generally vertical walls 196. Again, it will be seen that there is a tolerance space 145 between the sleeve 143a and the inner diameter of the cylindrical female member 118.

Figure 7 shows the sleeve 143a as being a continuous hollow cylinder with slightly rounded upper and lower edges 200 and 198. It will be appreciated that the edges 200 and 198 respectively abut the cylindrical boss 194 and the flat inner surface of the screw head formed by the straight wall of the screw 133a, Figure 6. They may be metal or plastic or other material.

Figure 8 shows an exploded view of the components of the structure of Figure 3 wherein 116 is the male unit with expandable sleeve 143 having a slot or slit 144 therein, as in Figure 4, and screw 133.

In operation of the embodiment of Figures 3, 4 and 8, the female retainer plate 122 is embedded in a denture crown 14. The male unit 116 including the screw and sleeve is inserted into the female cylindrical portion 118 so that the inner wall 150 of the male unit's shank 117 extends adjacent to, and beyond the midpoint of the length of, the portion 118, as best seen in Figures 3 and 6. The screw 133 with the sleeve 143 thereon is threaded into the recess 129 until the sleeve abuts the slanted edge of the boss and the slanted edge of the head of the screw. At this position, there will be a tolerance space of between 0.1 mm and 0.4 mm between the inner diameter of the female portion and the outer diameter of the sleeve. The retainer block 160 is fitted to the lateral projection 121 by the pin 172 and the combination is then embedded in adjacent denture material. Denture material, as will be appreciated, will flow about fins 184, 186, 188 and 190 and into the space 180 thus ensuring optimum retention in the denture material. The screw 133 is then turned into recess 129, thereby expanding the sleeve 143 against the inner cylindrical wall of the female member. Crown 14 and the adjacent denture material are now firmly connected. Some wear will occur on the sleeve after a period of use. It is only necessary to turn the screw 133 further into the recess 129 thus continuing the expansion of the sleeve against the wall of the cylindrical female member. When the sleeve becomes completely worn, it is replaced by a new one.

The embodiment of Figure 6 works in a similar manner, tightening of the screw 133a exerting axial pressure on the sleeve 143a to expand it radially against the inside of the female member 118.

**Claims**

1. A denture connector comprising interengaging male and female members, the female member being adapted to be attached to a denture crown and the male member being adapted to be attached to adjacent denture material, the male member (16, 116) comprising a boss (131, 194) received in the female member (12, 112) for rotation therein and an expandable sleeve (143, 143a) fitting over the boss (131, 194) and inside the female member (12, 112), the boss (131, 194) being provided with a screw (133, 133a) capable of exerting pressure on the sleeve (143, 143a) to expand it against the inside of the female member (12, 112), characterised in that a tolerance space (145) of between 0.1 mm and 0.4 mm is provided between the outer diameter of the sleeve (143, 143a) and the inside of the female member (12, 112) to permit adjustment of the male member within the female member in the unexpanded state of the sleeve, and in that an attachment member (17, 117) extends from the male member (16, 116) for attaching the said male member (16, 116) to adjacent denture material.

2. A denture connector according to claim 1, characterised in that the female member (12, 112) comprises a hollow cylinder, a web portion (24, 124) extending from the hollow cylinder and having a curved lower edge (26, 126) and a retainer plate (22, 122) on the web portion for embedding in a denture crown (14).

3. A denture connector according to claim 1 or 2, characterised in that said sleeve (143, 143a) is of plastics material.

4. A denture connector according to claim 3, characterised in that the sleeve (143, 143a) is of nylon.

5. A denture connector according to any one of the preceding claims, characterised in that said sleeve (143, 143a) is replaceable when worn.

6. A denture connector according to any one of the preceding claims, characterised in that said tolerance space (145) is substantially 0.3 mm.

7. A denture connector according to any one of the preceding claims, characterised in that the male member (16, 116) comprises a flat top part (119) with a depending boss portion (131) having a threaded bore receiving the screw (133).

8. A denture connector according to claim 7, characterised in that said boss portion (131) is conical and said screw (133) has a tapered wall, complementary and symmetrical with said conical boss, and said sleeve (143) has upper and lower bevelled edges for abutting said conical boss and said tapered edges of said screw.

9. A denture conector according to claim 7, characterised in that said boss portion (194) has a cylindrical wall and said sleeve (143a) has flat upper and lower surfaces abutting a flat surface on said conical boss and a flat surface on said screw.

10. A denture connector according to any one of the preceding claims, characterised by a retainer block (160) extending from a lateral projection (121) on the attachment member (117) of the male member (116) for attaching the male member to adjacent denture material.

11. A denture connector according to claim 10, characterised in that said retainer block (160) comprises parallel walls (162, 164) defining a slot (166) therebetween for receiving the lateral projection (121) and apertures (168, 170) in at least one of said parallel walls aligned with apertures (123, 125) in said lateral projection (121) and a U-shaped pin (172) with parallel legs (174, 176) for insertion through the apertures in the retainer block and the apertures in the lateral projection (121) thus securing the retainer block to the lateral projection.

12. A denture connector according to claim 11, characterised in that said retainer block (160) has two parallel projecting fins (184, 186, and 188, 190 respectively) on each of said parallel walls (162, 164) for receiving denture material, the secured lateral projection (121) and the parallel walls (162, 164) defining a slot (180) to receive denture material whereby the lateral projection (121) and the retainer block (160) are firmly secured in denture material.

13. A denture connector according to any one of the preceding claims, characterised in that the female member (12, 112) comprises a hollow cylinder having an outer wall and the attachment member (17, 117) of the male member (16, 116) comprises a depending shank (17, 117) having an inner wall (150) which extends adjacent to, and beyond the midpoint of the length of, the outer wall of the said hollow cylinder when the male member is fully received in the female member.

## Patentansprüche

1. Befestigung für Zahnprothese mit ineinander eingreifenden männlichen und weiblichen Elementen, wobei das weibliche Element zur Befestigung an einer Zahnkrone und das männliche Element zur Befestigung an benachbartes Zahnmaterial vorgesehen sind, wobei das männliche Element (16, 116) einen im weiblichen Element (12, 112) drehbar aufzunehmenden Ansatz (131, 194), sowie eine dehnbare Hülse (143, 143a) aufweist, welche die Hülse 8143, 143a) im weiblichen Element (12, 112) auf den Ansatz (131, 194) gesetzt ist, wobei der Ansatz (131, 194) eine Schraube (133, 133a) aufweist, mit welcher auf die Hülse (143, 143a) Druck ausgeübt werden kann um diese gegen die Innenseite des weiblichen Elementes (12, 112) zu dehnen, dadurch gekennzeichnet, dass ein Toleranzraum (145) von zwischen 0,1 mm und 0,4 mm zwischen dem äusseren Durchmesser der Hülse (143, 143a) und der Innenseite des weiblichen Elementes (12, 112) vorgesehen ist um eine Anpassung des männlichen Elementes im weiblichen Element bei nicht gedehntem Zustand der Hülse zu erlauben, und dass ein Befestigungselement (17, 117) am männlichen Element (16, 116) angeordnet ist um das männliche Element (16, 116) am benachbarten Zahnmaterial zu befestigen.

2. Befestigung für Zahnprothese nach Anspruch 1, dadurch gekennzeichnet, dass das weibliche Element (12, 112) einen hohlen Zylinder, einen Stegteil (24, 124), der sich vom hohlen Zylinder aus erstreckt und eine gebogene untere Kante (26, 126) besitzt, und eine in die Zahnkrone (14) einzubettende Halteplatte (22, 122) am Stegteil aufweist.

3. Befestigung für Zahnprothese nach Anspruch 1 oder 2, dadurch gekennzeichnet, dass die genannte Hülse (143, 143a) aus Kunststoff hergestellt ist.

4. Befestigung für Zahnprothese nach Anspruch 3, dadurch gekennzeichnet, dass die Hülse (143, 143a) aus Nylon hergestellt ist.

5. Befestigung für Zahnprothese nach einem der vorhergehenden Ansprüche, dadurch gekennzeichnet, dass die genannte Hülse (143, 143a) nach ihrem Verbrauch ersetzbar ist.

6. Befestigung für Zahnprothese nach einem der vorhergehenden Ansprüche, dadurch gekennzeichnet, dass der genannte Toleranzraum (145) im wesentlichen 0,3 mm beträgt.

7. Befestigung für Zahnprothese nach einem der vorhergehenden Ansprüche, dadurch gekennzeichnet, dass das männliche Element (16, 116) einen flachen oberen Teil (11) mit einem nach unten ragenden Ansatzteil (131) mit einer Gewindebohrung zur Aufnahme der Schraube (133) aufweist.

8. Befestigung für Zahnprothese nach Anspruch 7, dadurch gekennzeichnet, dass der genannte Ansatzteil (131) konisch ist und die genannte Schraube (133) eine dazu komplementäre und symmetrische sowie konische Wand aufweist und dass die Hülse (143) oben und unten abgeschrägte Kanten aufweist, die dazu vorgesehen sind, mit dem konischen Ansatz und der konischen Wand der Schraube zusammenzuwirken.

9. Befestigung für Zahnprothese nach Anspruch 8, dadurch gekennzeichnet, dass der genannte Ansatzteil (194) eine zylindrische Wand und die genannte Hülse (143a) flache obere und untere Flächen aufweist, die an einer flachen Fläche am genannten konischen Ansatz und an einer flachen Fläche an der genannten Schraube anstossen.

10. Befestigung für Zahnprothese nach einem der vorhergehenden Ansprüche, gekennzeichnet durch einen Aufnahmeblock (160), der sich von einem seitlichen Vorsprung (121) am Befestigungselement (117) des männlichen Elementes (116) erstreckt und dazu dient, das männliche Element am benachbarten Zahnmaterial zu befestigen.

11. Befestigung für Zahnprothese nach Anspruch 10, dadurch gekennzeichnet, dass der genannte Aufnahmeblock (160) zwei parallele Wände (162, 164) aufweist, die zwischen ihnen einen Spalt (166) zur Aufnahme des seitlichen Vorsprungs (121) und Öffnungen (168, 170) in wenigstens einer der genannten parallelen Wände, die angepasst sind an Öffnungen (123, 125) in dem genannten seitlichen Vorsprung (121) und ein U-förmiger Stift (172) mit parallelen Beinen (174, 176) zur Einführung durch die Öffnungen im Aufnahmeblock und durch die Öffnungen im seitlichen Ansatz (121) um dadurch den Aufnahmeblock am seitlichen Vorsprung zu befestigen.

12. Befestigung für Zahnprothese nach Anspruch 11, dadurch gekennzeichnet, dass der Aufnahmeblock (160) zwei parallele und vorstehende Rippen (184, 186 bzw. 188, 190) auf jeder der beiden parallelen Wände (162, 164) einen Spalt (180) zur Aufnahme von Zahnmaterial bilden, wobei der seitliche Vorsprung (121) und der Aufnahmeblock (160) fest im Zahnmaterial fixiert sind.

13. Befestigung für Zahnprothese nach einem der vorhergehenden Ansprüche, dadurch gekennzeichnet, dass das weibliche Element (12, 112) einen hohlen Zylinder mit einer äusseren Wand und das Befestigungselement (17, 117) des männlichen Elementes (16, 116) einen sich nach unten erstreckenden Steg (17, 117) mit einer inneren Wand (150) aufweist, wobei die innere Wand sich neben und über den Mittelpunkt der Längen der äusseren Wand des hohlen Zylinder erstreckt, wenn das männliche Element voll im weiblichen Element aufgenommen ist.

**Revendications**

1. Connecteur dentaire comprenant un élément mâle et un élément femelle s'engageant l'un dans l'autre, l'élément femelle étant destiné à se fixer à une couronne de dent et l'élément mâle étant destiné à se fixer à un matériau de denture adjacent, l'élément mâle (16, 116) comprenant un bossage (131, 194) venant se loger dans l'élément femelle (12, 112) pour tourner à l'intérieur de celui-ci, et un manchon dilatable (143, 143a) s'adaptant sur le bossage (131, 194) à l'intérieur de l'élément femelle (12, 112), le bossage (131, 194) étant muni d'une vis (133, 133a) capable d'exercer une pression sur le manchon (143, 143a) pour dilater celui-ci contre l'intérieur de l'élément femelle (12, 112), connecteur dentaire caractérisé en ce qu'un espace de tolérance (145) de 0,1 mm à 0,4 mm est ménagé entre le diamètre extérieur du manchon (143, 143a) et l'intérieur de l'élément femelle (12, 112) pour permettre le réglable de l'élément mâle à l'intérieur de l'lément femelle dans l'état non dilaté du manchon, et en ce qu'un élément de fixation (17, 117) part de l'élément mâle (16, 116) pour fixer cet élément mâle (16, 116) au matériau de denture adjacent.

2. Connecteur dentaire selon la revendication 1, caractérisé en ce que l'élément femelle (12, 112) comprend un cylindre creux, une partie de joue (24, 124) partant du cylindre creux et présentant un bord inférieur courbe (26, 126) et une plaque de retenue (22, 122) formée sur la partie de joue pour se noyer dans une couronne de dent (14).

3. Connecteur dentaire selon l'une quelconque des revendications 1 et 2, caractérisé en ce que le manchon (143, 143a) est en matière plastique.

4. Connecteur dentaire selon la revendication 3, caractérisé en ce que le manchon (143, 143a) est en nylon.

5. Connecteur dentaire selon l'une quelconque des revendications précédentes, caractérisé en ce que le manchon (143, 143a) est remplaçable, lorsqu'il est usé.

6. Connecteur dentaire selon l'une quelconque des revendications précédentes, caractérisé en ce que l'espace de tolérance (145) est d'exactement 0,3 mm.

7. Connecteur dentaire selon l'une quelconque des revendications précédentes, caractérisé en ce que l'élément mâle (16, 116) comprend une partie supérieure plate (119) munie d'une partie de bossage en saillie (131) percée d'un alésage fileté destiné à recevoir la vis (133).

8. Connecteur dentaire selon la revendication 7, caractérisé en ce que la partie de bossage filetée (131) est conique et en ce que la vis (133) présente une paroi conique complémentaire et symétrique du bossage conique, le manchon (143) comportant des bords supérieur et inférieur chanfreinés destinés à venir buter contre le bossage conique et les bords coniques de la vis.

9. Connecteur dentaire selon la revendication 7, caractérisé en ce que la partie de bossage (194) comporte une paroi cylindrique et en ce que le manchon (143a) comporte des surfaces supérieure et inférieure plates venant buter contre une surface plate du bossage conique et une surface plate de la vis.

10. Connecteur dentaire selon l'une quelconque des revendications précédentes, caractérisé en ce qu'il comporte un bloc de retenue (160), partant d'une projection latérale (121) de l'élément de fixation (117) de l'élément mâle (116), pour fixer cet élément mâle au matériau de denture adjacent.

11. Connecteur dentaire selon la revendication 10, caractérisé en ce que le bloc de retenue (160) comporte des parois parallèles (162, 164) définissant entre elles une fente (116) destinée à recevoir la projection latérale (121), des ouvertures (168, 170) percées dans l'une au moins des parois parallèles et alignées avec les ouvertures (123, 125) de la projection latérale (121), et une broche en forme de U (172) munie de tiges parallèles (174, 176) destinées à s'introduire dans les ouvertures du bloc de retenue et dans les ouvertures de la projection latérale (121) pour fixer ainsi le bloc de retenue à la projection latérale.

12. Connecteur dentaire selon la revendication 11, caractérisé en ce que le bloc de retenue (160) comporte deux ailerons parallèles en saillie (respectivement 184, 186 et 188, 190) sur chacune des parois parallèles (162, 164) pour recevoir le matériau de denture, la projection latérale fixée (121) et les parois parallèles (162, 164) définissant une fente (180) destinée à recevoir le matériau de denture, ce qui permet ainsi de fixer solidement la projection latérale (121) et le bloc de retenue (160) dans le matériau de denture.

13. Connecteur dentaire selon l'une quelconque des revendications précédentes, caractérisé en ce que l'élément femelle (12, 112) comprend un cylindre creux muni d'une paroi extérieure, et en ce que l'élément de fixation (17, 117) de l'élément mâle (16, 116) comprend une tige en saillie (17, 117) munie d'une paroi intérieure (150) s'étendant au voisinage et au-delà du point milieu de la longueur de la paroi extérieure du cylindre creux, lorsque l'élément mâle est complètement logé dans l'élément femelle.

*Fig. 1.*

*Fig. 2.*

EP 0 238 733 B1

FIG. 3.

FIG. 4.

FIG. 5.

FIG.6.

FIG.7.

FIG.8.